# DEMANDE DE BREVET EUROPEEN

(11) **EP 1 387 261 A1**
(43) Date de publication de la demande: **04.02.2004**
(21) Numéro de dépôt: 02291931.0
(22) Date de dépôt: 30.07.2002
(51) Int. Cl.: G06F 9/44

(54) **Logiciel de generation de code d'application informatique et langage de description de logiciel**

(71) Demandeur: Sereneo, 92357 Le Plessis Robinson (FR)
(72) Inventeur: Arcaro, Stéphane, 92160 Antony (FR); Godefroy, Frédéric, 92310 Sevres (FR); Mignot, Eric, 92160 Antony (FR)
(74) Mandataire: Cabinet Hirsch

(57) **Abrégé**

Le logiciel génère le code informatique d'au moins une partie d'une application informatique, à partir d'une description de cette partie de l'application informatique en la répartissant entre plusieurs générateurs de code en fonction de règles de répartition modifiables. Chaque générateur de code traduit la partie de la description qui lui est fournie, pour fournir au moins une partie du code informatique dans un langage respectif. L'invention propose aussi un langage de description de logiciel, notamment du type langage objet de modélisation d'application informatique. L'invention propose aussi un logiciel permettant de construire graphiquement ou textuellement un modèle d'application informatique, notamment un modèle d'interface homme-machine d'application informatique et de fournir une description du modèle dans un langage de description de logiciel selon l'invention.

## Description

### DOMAINE TECHNIQUE

La présente invention concerne un logiciel de génération du code informatique d'au moins une partie d'une application informatique informatique à partir d'une description de ladite partie de l'application informatique. L'invention concerne aussi un langage de description de logiciel, notamment du type langage objet de modélisation d'application informatique.

Dans la présente description, nous employons les termes suivants avec le sens indiqué :
- « application informatique » : désigne tout programme ou tout ensemble de programmes prévus pour fonctionner conjointement, dont le but est de rendre des services à leurs utilisateurs ; une application est constituée de :
   - ses interfaces, c'est-à-dire, l'interaction avec le monde extérieur à l'application (utilisateurs humains, autres systèmes d'information),
   - de ses traitements, c'est-à-dire ses rouages internes, ses algorithmes,
   - et de ses données, c'est-à-dire de toutes ses structures d'information stockées en mémoire vive ou sur support persistant, comme un disque dur.
- « architecture technique » : il s'agit de l'ensemble des technologies utilisées pour réaliser une application informatique, ainsi que des règles de répartition permettant d'affecter les différents parties de cette application sur ces différentes technologies et des modes de communications entre ces technologies.
- «classe» : désigne la notion de classe communément manipulée dans les formalisme de modélisation et langages de programmation orienté objet c'est-à-dire l'agrégation de données et de traitements (appelés respectivement attributs et méthodes) destiné à fonctionner ensemble dans une application informatique.
- « client » : désigne l'utilisateur de services qu'il ne définit pas lui même. Un client utilise les services mis à disposition par des serveurs. Par extension, on parle d'applications client, d'interface client, etc.
- « code source » : texte écrit dans un langage de programmation ou de description qui est ensuite compilé en langage machine afin d'être exécuté par une plate-forme informatique matérielle, ou interprété par un environnement logiciel ou matériel d'interprétation.
- « code compilé » : résultat de l'opération de compilation d'un code source.
- « code » : désigne indifféremment du code source ou du code compilé.
- « compilation » : action de traduction d'une description exprimée dans un langage de programmation vers le langage natif d'une plate-forme informatique matérielle, avant son exécution par cette plate-forme informatique matérielle.
- « serveur » : désigne le fournisseur d'un service. Les services mis à disposition par un serveur peuvent être utilisés par des clients. Par extension, on parle d'applications serveur, d'interface serveur, etc.
- « héritage » : relation attachant deux classes dont une première hérite d'une seconde et permettant à la première d'enrichir la définition de la seconde tout en conservant toutes les caractéristiques de cette seconde classe.
- « interface » : dans une application informatique, une interface est un ensemble de points d'échange qui permettent à l'application de communiquer avec le monde extérieur (par exemple, d'autres applications ou des utilisateurs), et de lui présenter des services et des informations.
- « IHM » : signifie Interface Homme Machine, et est synonyme d'interface utilisateur.
- « interface utilisateur » : dans une application informatique, l'interface utilisateur est une interface particulière: c'est la partie d'une application dédiée spécifiquement à la communication à double sens entre cette application et ses utilisateurs. Ainsi, grâce à l'IHM, l'application présente les données et informations traitées, par exemple en les affichant graphiquement sur l'écran, et l'utilisateur saisit des données et déclenche des actions, par exemple grâce à des champs de formulaire, des boutons et des menus, au moyen du clavier et de la souris. Ces IHM sont constituées de composants imitant graphiquement l'apparence d'objets du monde réel qui permettent de reconnaître les fonctions affichées correspondantes. Par exemple, les données sont souvent affichées et modifiables dans un rectangle tracé à l'écran, imitant les champs de formulaire papier, de même les actions sont figurées par un texte dans une boite rectangulaire en relief s'enfonçant quand on clique dessus, à l'instar des boutons des appareils électriques. L'IHM est constituée d'une partie statique et d'une partie dynamique. La partie statique comprend tous les aspects graphiques que sont la mise en forme et la présentation de l'information. La partie dynamique quant à elle comprend tous ce qui permet à l'utilisateur de commander l'application et d'interagir avec elle, tels que les événements issus de périphériques et la gestion de la navigation.
- « Interprétation » : action de traduction d'une description exprimée dans un langage de programmation vers le langage natif d'un ordinateur pendant son exécution par l'ordinateur.
- « langage de programmation » : formalisme permettant de décrire des actions destinées à être exécutées par un ordinateur. Ces descriptions sont soit exécutées directement par l'ordinateur, lorsque le formalisme natif de l'ordinateur est utilisé, soit après compilation ou interprétation. Une application informatique est décrite en utilisant un ou plusieurs langages de programmation. - « modélisation » : désigne l'action de produire une description d'un objet à réaliser, afin de servir de modèle à sa réalisation effective. Cette action de modélisation consiste souvent, en informatique, à s'abstraire de certaines considérations propres à la réalisation, telles que les technologies employées, les considérations techniques, et les langages de programmation utilisés. Cela permet de simplifier le travail de conception en réduisant le nombre de concepts à manipuler.
- « modélisation abstraite » : est l'acte de représenter les applications informatiques à réaliser dans un formalisme indépendant des technologies et des considérations techniques en se basant sur des concepts abstraits.
- « outil de développement logiciel » : application informatique permettant de construire des applications informatiques.
- « technologie » : élément logiciel pouvant être un composant d'une application informatique réalisée ou bien un élément intermédiaire de son processus de réalisation comme par exemple un outil ou un langage de programmation. On regroupe sous ce terme entre autres à la fois les langages de programmation, les ateliers de développement logiciels qui y sont associés, les composants logiciels qu'on peut assembler dans une application, les services et ressources techniques mis à disposition par un environnement matériel ou logiciel et les protocoles de communication entre éléments logiciels.
- « génération de code » : désigne la production automatique de code pour une application informatique au moyen d'un générateur. Elle se fait à partir d'une description d'application logicielle fournie au générateur et servant à piloter cette génération. Celui-ci, après analyse de cette description, construit le code attendu en sortie. Cette description peut-être exprimée dans un langage de plus haut niveau que celui dans lequel le code sera produit. Ainsi on fait souvent le choix d'un langage le plus proche possible de l'expression naturelle humaine soit sous forme graphique soit sous forme textuelle. Ainsi on peut exploiter le générateur sans avoir à connaître le formalisme du langage de programmation utilisé dans le code généré.

Par le terme« langage », on entend tous les formats de représentations permettant de décrire tout ou partie des logiciels afin de contribuer directement ou indirectement à leur construction effective.

### TECHNIQUE ANTERIEURE

Actuellement, les outils qui permettent de générer du code n'offrent cette possibilité que pour un seul langage de programmation à la fois ou un ensemble de langage à la structure et aux rôles prédéfinis et figés. Cette limite vient du fait que le générateur de code est lié explicitement dans sa structure même à ce langage ou à cet ensemble de langages. Ainsi, lorsque l'on souhaite produire automatiquement du code pour une architecture technique quelconque comprenant plusieurs langages de programmation, on est généralement obligé de fournir plusieurs descriptions en entrée de plusieurs générateurs de code. Cela revient à effectuer manuellement la répartition du code sur les technologies de l'architecture technique. Ce cas se présente lorsque l'architecture technique de l'application à réaliser comporte plusieurs technologies. Et c'est aujourd'hui le cas le plus fréquent dans le cadre du développement d'une application informatique.

Pour effectuer une génération de code, les générateurs de code existant se fondent sur des descriptions de plus haut niveau que le niveau du code à produire. Elles reposent souvent sur des langages de modélisation comme UML et d'en générer le code dans un language de programmation donné

A titre d'exemple, l'outil Rational Rose® de la société Rational est un des outils permettant de réaliser une modélisation abstraite d'une application informatique en utilisant UML.

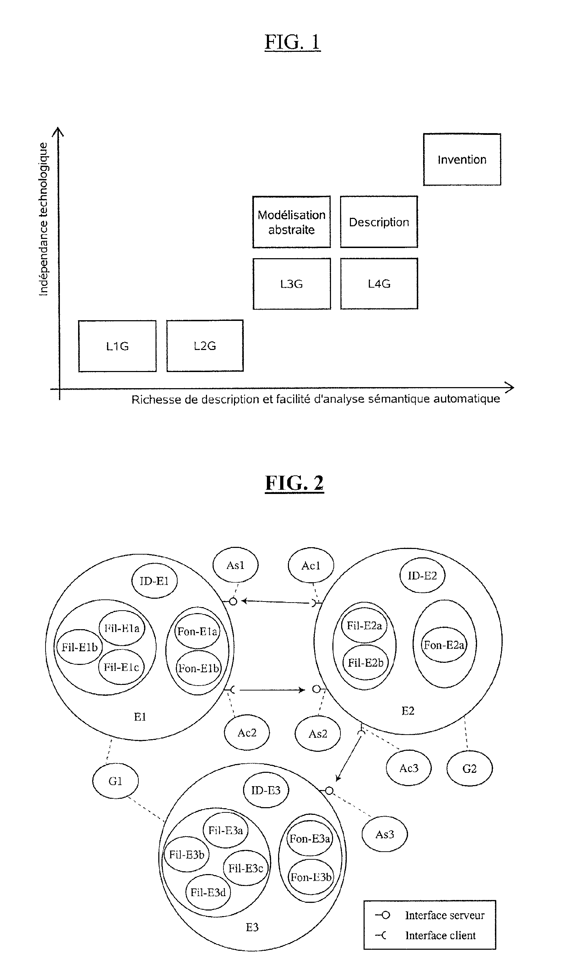

En ce qui concerne les languages, on peut les catégoriser sur un diagramme à deux dimensions comme illustré sur la figure 1. La première, l'échelle verticale, représente le caractère d'indépendance technologique du langage. Elle croît à mesure que les informations décrites grâce au langage imposent de moins en moins, du fait de leur forme, d'utiliser telle ou telle plate-forme technique ou fonctionnelle. La seconde, l'échelle horizontale, représente la facilité qu'il y a à identifier automatiquement le rôle, la structure et le fonctionnement d'une application à partir de sa description faite dans un langage, c'est-à-dire la facilité d'analyse sémantique automatique de l'application à partir de sa description. Dit encore autrement, il s'agit de la facilité à convertir cette description dans une forme directement lisible par l'homme, précisant le fonctionnement et le sens de cette application. Cette échelle croît à mesure qu'à la fois les langages :
- offrent des notions de plus en plus nombreuses et riches avec lesquelles on peut décrire un service technique ou fonctionnel donné de plus en plus riche en utilisant un nombre de ces notions de plus en plus faible,
- imposent au programmeur l'utilisation de plus en plus exclusive de ces notions pour réaliser cette description.

On peut distinguer les différents types de langages suivants :
- les langages de 1ère génération : langages machines (par exemple : code binaire x86 ou 68000) ;
- les langages de 2ème génération : langages symboliques (par exemple : assembleur x86 ou 68000) ;
- les langages de 3ème génération : langages procéduraux et langages objets (par exemple : Basic ou Java) ;
- les langages de 4ème génération: langages manipulant des notions agrégées et classiquement pris en charge par des ateliers de génie logiciel dédiés (par exemple : PowerBuilder ou Windev) ;
- les langages de modélisation abstraite (par exemple : UML ou Merise) ;
- les langages de description (par exemple : HTML, WML).

Les langages de première génération sont les langages de plus bas niveau. Les instructions qui les composent sont directement compréhensibles par un processeur. Elles sont élémentaires et en nombre restreint. En pratique, elles consistent en des nombres (exprimés en binaire) codifiant les actions réalisables par le processeur en interne ou bien en interaction avec son environnement matériel. Ces langages sont intimement liés à l'environnement matériel capable de les exécuter. Cette dépendance technologique les place tout en bas de l'échelle de dépendance technologique. En ce qui concerne l'analyse sémantique automatique, celle-ci est pratiquement impossible du fait du caractère élémentaire des instructions disponibles. En effet, la moindre opération à laquelle un humain pourrait donner une unité de sens peut nécessiter plusieurs centaines d'instructions exprimées en langage machine. Ceci justifie le placement de ces langages tout en bas de l'échelle de facilité d'analyse sémantique.

Les langages de deuxième génération sont apparus pour permettre aux programmeurs de ne plus utiliser directement les codes binaires des langages machines. En lieu et place de ces codes, les programmeurs ont pu utiliser des symboles plus directement compréhensibles par l'homme. Néanmoins, ces langages symboliques restent des langages d'aussi bas niveau que les langages de première génération, et seule la désignation des opérations élémentaires du langages change de forme (passant du binaire à une description alphanumérique). En effet, leur formalisme est en bijection directe avec les codes binaires des langages de première génération. Ils sont donc, comme ces derniers, placés tout en bas de l'échelle d'indépendance technologique. En ce qui concerne l'analyse sémantique automatique, celle-ci est pratiquement impossible sans disposer d'un analyseur d'une intelligence au moins égale à celle du programmeur ayant réalisé la description de cette application dans ce langage. En effet, le formalisme est de si bas niveau que les seuls éléments qui pourraient porter une information de sens fonctionnel ou technique pourraient être inclus dans les commentaires. Or le formalisme n'offre aucun cadre fonctionnel ou technique structuré, ce qui interdit de les exploiter pour toute analyse déterministe.

Les langages de troisième génération sont apparus pour permettre de décrire une application informatique indépendamment du matériel qui exploitera cette description pour exécuter l'application en question et pour donner accès à des opérations de base plus complexes que celles des langages de première et deuxième génération. Néanmoins, même si le formalisme et la syntaxe sont abstraits du matériel, les possibilités de description qu'offrent ces langages sont intimement liées à l'environnement technique qui sera utilisé pour exécuter la description effectuée. Ces langages constituent donc un premier progrès d'indépendance technologique qui permet au programmeur d'ignorer la manière dont les fonctions de bases fournies par le langage sont mise en oeuvre sur la plate-forme technique cible, mais cela ne dispense pas le programmeur de devoir agencer ces fonctions de base d'une certaine manière afin de prendre en compte les spécificités de cette plate-forme. En ce qui concerne la facilité d'analyse sémantique automatique, les langages de troisième génération constituent également un progrès car ils offrent un cadre structuré pour certains services techniques ou fonctionnels notamment sur la structure des routines algorithmiques et sur la structure des données manipulées. Néanmoins, ils offrent souvent la possibilité de s'extraire ou de contourner le cadre qu'ils fournissent pour décrire un service donné. Cependant, ce niveau d'analyse ne peut dépasser le niveau de complexité des fonctions de bases fournies par le langage, et il est dégradé par cette possibilité de contournement. Ainsi, pour constituer des unités de sens permettant d'interpréter le fonctionnement de l'application décrite, il faut l'intervention d'un humain ou un outil d'analyse fondé sur l'intelligence artificielle qui dépasse ce que l'on sait faire aujourd'hui.

Les langages de quatrième génération (L4G) sont couplés à des outils communément appelés AGL (Atelier de Génie Logiciel). Ce mariage est si fort qu'on a coutume d'employer indifféremment l'un ou l'autre des deux termes L4G ou AGL. Ils sont nés d'une envie de capitalisation concernant la création de composants techniques. Ces AGL, partant du principe que la plupart des applications peuvent être construites par assemblage et paramétrage de composants génériques, proposent une large palette de composants prédéfinis qu'il suffit de paramétrer et de faire communiquer entre eux. Ces AGL sont tous liés à un langage technique spécifique qui, comme les langages de troisième génération, offre des possibilités limitées par l'environnement technologique d'exécution duquel ils dépendent. Cette limite place ces L4G au même niveau d'indépendance technologique que les langages de troisième génération. Par contre, en ce qui concerne la facilité d'analyse sémantique automatique, celle-ci est supérieure à tous ceux cités précédemment. En effet, les AGL imposent strictement au programmeur la structure permettant de décrire un service technique ou fonctionnel. L'analyse sémantique automatique peut donc se reposer sur un déterminisme parfait pour déceler ces services, avec la limite que le service identifié est associé à une réalisation spécifique à une plateforme technique unique, et n'est pas un service générique. Cette analyse ne peut donc pas toujours présumer de l'intention fonctionnelle du programmeur, mais elle peut toujours déterminer son intention technique.

Les langages de modélisation abstraite sont nés d'une envie de description des applications indépendante de tout caractère technologique. Ils se sont concentrés sur les aspects algorithmiques et de structure des données. Ils sont utilisés pour développer des applications en deux phases : la première concerne la création d'un modèle et la seconde la génération automatique du code dans un langage (la plupart du temps un langage de troisième génération). Cette capacité de créer un modèle indépendant des technologies pour la plupart des services à décrire dans une application informatique nous fait le placer au dessus des autres langages que nous avons cités jusqu'à présent sur l'échelle de l'indépendance technologique. Cependant, pour pouvoir générer une application complète, il est indispensable, lorsqu'on utilise ces outils, d'inclure dans le modèle des liens avec les éléments de base du langage de troisième génération qui sera finalement utilisé, ce qui rend in fine le modèle dépendant de cette technologie. Enfin, il est nécessaire de décrire l'application informatique qu'on modélise d'une façon particulière selon la configuration de l'architecture technique, ce qui rend le modèle dépendant de celle-ci. En ce qui concerne la facilité d'analyse sémantique automatique, celle-ci est équivalente à celle obtenue par l'utilisation d'un langage de troisième génération car les langages de modélisation abstraite offrent un cadre structuré pour décrire certains services fonctionnels. L'analyse sémantique automatique des modèles reste ainsi, du fait de la manipulation de notions de bas niveau et très abstraites (classe, relation, méthode, collaboration,...), incapable d'identifier automatiquement des services complexes techniques ou fonctionnels particuliers, sans intervention humaine ou sans module d'intelligence artificiel dépassant l'état de l'art actuel.

Les langages de description sont fondés sur une syntaxe définissant de manière figée les éléments informatiques qu'on peut décrire en les utilisant. Comme les langages de 4ème génération, ils définissent des notions de plus haut niveau qui sont destinées à être assemblées pour former une description. Le sujet de cette description est souvent graphique et est notamment utilisé en informatique pour décrire une interface homme machine. Historiquement, ils servaient à mettre en forme du texte, avant impression ou affichage à l'écran. Les éléments qu'ils permettent de décrire sont statiques. Pour introduire du dynamisme, ces langages sont parfois associés à un langage de troisième génération. Ils ne sont pas destinés à permettre la production d'une application. Leur prise en charge repose sur un outil appelé navigateurs, qui les interprète pour effectuer, ce qu'on appelle le rendu de leur description, c'est-à-dire la transformation de l'information contenue dans le langage de description ainsi que ce dernier le prévoit d'après sa spécification. Concernant l'indépendance technologique, ils permettent dans le cadre des capacités du langage de faire afficher leur description sur n'importe quelle plate-forme matérielle et logicielle, mais ils imposent une architecture technique particulière, basée sur l'existence d'un outil de rendu. Par contre, en ce qui concerne la facilité d'analyse sémantique automatique, elle est au niveau de celle des L4G, car elle est fondée, comme eux sur une structure contraignante de services prédéfinis, mais imposant une mise en oeuvre technique particulière.

### EXPOSE DE L'INVENTION

L'invention vise à faciliter le développement des applications informatiques et de permettre ce développement de façon plus rapide en comparaison de l'art antérieur. Elle vise aussi à rendre plus fiable à la fois l'application informatique développée et le déroulement du développement de l'application informatique. Elle vise encore à faciliter la réutilisation des développements réalisées pour une application informatique par exemple pour le développement d'une autre application ou encore pour adapter l'application informatique à une nouvelle architecture technique.

A cette fin, la présente invention propose un logiciel de génération du code informatique d'au moins une partie d'une application informatique, dans lequel le logiciel génère ledit code informatique à partir d'une description de ladite partie de l'application informatique en répartissant ladite description entre plusieurs générateurs de code en fonction de règles de répartition modifiables, chaque générateur de code traduisant la partie de ladite description qui lui est fournie, pour fournir au moins une partie dudit code informatique dans un langage respectif. Ainsi, les règles de répartition peuvent avantageusement correspondre à l'architecture technique qui mettra en oeuvre l'application informatique. Bien entendu, il est parfaitement envisageable d'adresser une même partie de la description à plusieurs générateurs de code différent, par exemple si l'on souhaite générer simultanément le code informatique de l'application informatique pour plusieurs architectures techniques différentes. Les revendications 2 à 9 définissent des modes de réalisation préférés du logiciel selon l'invention. Selon un austre aspect, l'invention propose aussi un langage de description de logiciel, notamment du type langage objet de modélisation d'application informatique, tel que défini dans la revendication 9. Selon encore un autre aspect, l'invention propose un logiciel permettant de construire graphiquement ou textuellement un modèle d'application informatique, notamment un modèle d'interface homme-machine d'application informatique et de fournir une description du modèle dans le langage de description de logiciel selon l'invention.

D'autres caractéristiques et avantages de l'invention apparaîtront à la lecture de la description qui suit d'un mode de réalisation préféré de l'invention, donnée à titre d'exemple et en référence au dessin annexé.

### DESCRIPTION SOMMAIRE DES DESSINS

La figure 1 illustre schématiquement la position du language selon l'invention par rapport à l'art antérieur en terme de richesse de description et de facilité d'analyse sémantique automatique d'une part, et en terme d'indépendance technologique.

La figure 2 illustre un exemple générique d'architecture technique.

La figure 3 illustre un exemple de fragment d'architecture technique réelle pouvant servir à réaliser une application intranet HTML / JSP.

La figure 4 est un schéma illustrant le fonctionnement d'un générateur de code architectural selon l'invention.

### MANIERES PREFEREES DE RÉALISER L'INVENTION

Nous décrirons d'abord la manière préférée de réaliser le logiciel de génération de code selon l'invention avant de décrire celle du language de description de logiciel.

### 1) Le logiciel de génération de code

Par commodité, nous désignerons par la suite le logiciel de génération de code selon l'invention par générateur de code architectural. En effet, nous parlerons dans la suite de génération de code architecturale, car il s'agit de générer du code pour une architecture technique dans son ensemble, c'est-à-dire de répartir le code produit sur plusieurs technologies grâce à des générateurs de code chacun responsable d'une technologie de l'architecture.

La génération de code architecturale est réalisée par le générateur de code architectural qui permet automatiquement d'analyser une description d'application informatique, puis de répartir automatiquement ses éléments constitutifs, afin d'en générer le code, en fonction de la description d'une architecture technique qui définit les choix à effectuer pour obtenir cette répartition sur différents générateurs de code et adaptateurs d'interface entre technologies, chacun prenant en charge une technologie particulière.

Le générateur de code architectural comprend les modules suivants :
- un analyseur de description d'application capable d'analyser des fichiers de description d'applications logicielles exprimés dans un format de description d'application,
- un analyseur de description d'architecturecapable d'analyser des fichiers de description d'architecture technique dans un format de description d'architecture,
- un filtre d'espace technologique,
- des générateurs de code,
- des adaptateurs serveur,
- des adaptateurs client,
- un comparateur,
- un répartiteur,
- un coordinateur.

Nous allons décrire successivement chacun de ces éléments ainsi que le fonctionnement du générateur de code architectural.

### 1.1) Format de description d'application

Ce format est choisi pour permettre de décrire les constituants de l'application informatiquedont on cherche à produire le code grâce au générateur de code architectural.

Il peut avantageusement s'agir du language de description de logiciel selon l'invention plus particulièrement décrit au point 2). Néanmoins, d'autres formats peuvent être utilisés.

### 1.2) Analyseur de description d'application

L'analyseur de description d'application est prévu pour traiter des fichiers de description d'applications logicielles exprimés dans le format défini au point 1.1). Il vérifie que les fichiers qu'on lui transmet sont conformes à ce format et, à défaut, il émet une erreur.

Il identifie, sans perte d'informations nécessaires à la réalisation de l'application, les éléments, énumérés ci-dessous, à partir de ces fichiers puis les en extraire. Ces éléments constituent alors une représentation décomposée de la description de l'application destinée à être transmise à d'autres modules. Si le format de description d'application le nécessite, il peut être fait appel à des fichiers externes tels que des bibliothèques pour compléter cette analyse. Une description d'application effectuée en Java par exemple, utilise des classes du langage dont la définition ne fait pas partie de la description d'application mais se trouve dans des bibliothèques externes. Ces bibliothèques sont alors utilisées à l'analyseur de description d'application pour repérer que la classe qu'il est en train d'analyser est une classe du langage.

Les éléments en question sont :
- une liste de classes dont chacune contient, le cas échéant, la liste de ses attributs typés et la liste de ses méthodes ainsi que leur signature typée totalement définie et le cas échéant, leur définition sous la forme de la séquence de commandes et opérations qu'elle exécute. On peut éventuellement y ajouter des liens vers d'autres classes dont la classe considérée hérite, si cette notion d'héritage est introduite.
- la liste des dépendances entre classes, mises en relation précisément avec le point de chaque classe où ces dépendances trouvent leur origine et leur cible. Chaque dépendance représente un lien de dépendance entre deux classes différentes. Dans cette dépendance, on considère que la classe qui est dépendante de l'autre est la classe client. La classe dont la classe client est dépendante est la classe serveur.

La décomposition de la description de l'application issue de l'extraction de ces éléments est exprimée dans un format interne au générateur de code architectural. Ce format est partagé par tous les modules qui en ont besoin.

### 1.3) Format de description d'architecture

Ce format est prévu pour décrire l'architecture technique sur laquelle sera réparti le code produit. Ce format permet de définir
- des espaces technologiques : il s'agit d'ensembles, munis chacun d'un identifiant, constitués du regroupement des éléments suivants :
   - de la référence à un générateur de code (par son identifiant unique), ce générateur supportant une technologie donnée qui produira le code de l'application pour cet espace technologique,
   - d'un jeu de paramètre de fonctionnement, c'est-à-dire une liste de valeurs servant à paramétrer le fonctionnement de ce générateur de code (tel que défini au point 1.6),
   - et d'un jeu de paramètres de filtrage, c'est-à-dire une liste de valeurs destinés au filtre d'espaces technologiques (défini au 1.5) afin de permettre à ce dernier de vérifier si une classe (au sens du point 1.2) est censée ou non être prise en charge (au sens du 1.10) par cet espace technologique.
- ses associations entre des adaptateurs et des dépendances orientées entre espaces technologiques : pour chaque dépendance orientée d'un espace technologique envers un autre espace technologique, on affecte un adaptateur serveur et un adaptateur client. La dépendance est orientée selon le sens défini par les rôles dans cette dépendance allant de l'espace qui est dépendant vers l'espace dont il dépend. Dans cette orientation, on considère que l'espace qui est dépendant est l'espace client et que l'espace dont il dépend est l'espace serveur.

Le schéma de la figure 2 illustre un exemple générique d'architecture technique.

Le schéma ci-dessus montre 3 espaces technologiques (E1) (E2) et (E3) dans lequel :
- l'espace (E1) est pris en charge par le générateur de code (G1) et est doté de l'identifiant unique (ID-E1), du jeu de paramètres de fonctionnement (Fon-Ela) et (Fon-Elb) et du jeu de paramètres de filtrage (Fil-Ela), (Fil-Elb) et (Fil-Elc). L'espace (E2) est pris en charge par le générateur de code (G2) et est doté de l'identifiant unique (ID-E2), du jeu de paramètres de fonctionnement (Fon-E2a) et du jeu de paramètres de filtrage (Fil-E2a) et (Fil-E2b). L'espace (E3) est pris en charge par le générateur de code (G1) et est doté de l'identifiant unique (ID-E3), du jeu de paramètres de fonctionnement (Fon-E3a) et (Fon-E3b) et du jeu de paramètres de filtrage (Fil-E3a), (Fil-E2b), (Fil-E2c) et (Fil-E2d).
- toute dépendance d'un élément d'application pris en charge par (E2) envers un élément d'application pris en charge par (E1) est prise en charge par l'adaptateur client (Ac1) et l'adaptateur serveur (As1). Toute dépendance d'un élément d'application pris en charge par (E1) envers un élément d'application pris en charge par (E2) est prise en charge par l'adaptateur client (Ac2) et par l'adaptateur serveur (As2). Toute dépendance d'un élément d'application pris en charge par (E2) envers un élément d'application pris en charge par (E3) est prise en charge par l'adaptateur client (Ac3) et par l'adaptateur serveur (As3).

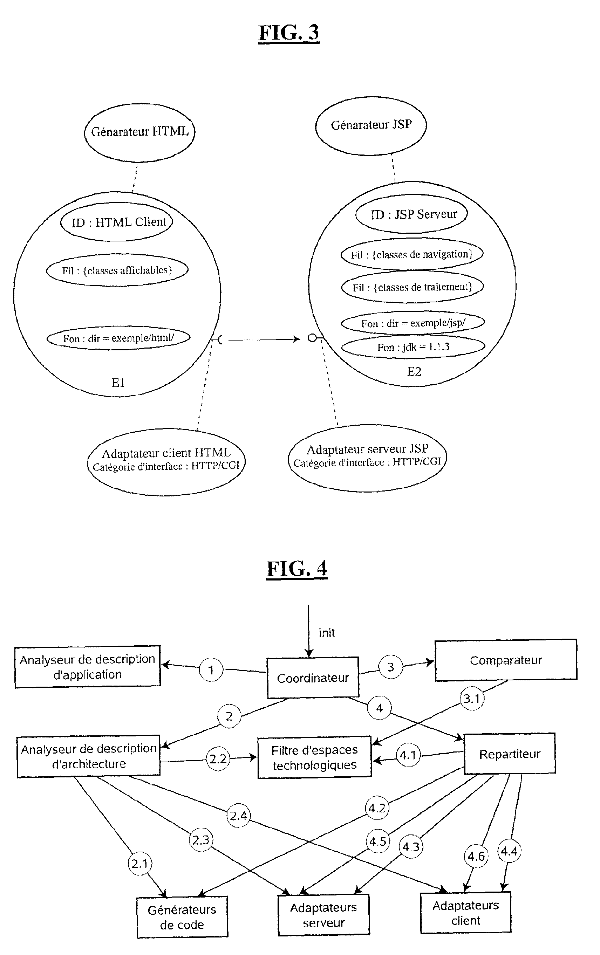

La figure 3 présente un exemple de fragment d'architecture technique réelle pouvant servir à réaliser une application intranet HTML / JSP.

### 1.4) Analyseur de description d'architecture

L'analyseur de description d'architecture traite des fichiers de description d'architecture technique exprimés dans le format défini au point 1.3.

Il vérifie que les fichiers qu'on lui transmet sont conformes à ce format, et à défaut il émet une erreur.

Il identifie, sans perte d'informations nécessaires à la réalisation de l'application, les éléments, énumérés ci-dessous, à partir de ces fichiers puis les en extraire. Ces éléments constituent alors une représentation décomposée de la description de l'architecture destinée à être transmise à d'autres modules. Les éléments en question sont :
- la liste des espaces technologiques (identifiant unique, générateur de code et jeux de paramètres).
- la liste des couples d'espaces technologiques client et serveur, et de leurs couples d'adaptateur client et serveur associés.

La décomposition de la description de l'architecture issue de l'extraction de ces éléments est exprimée dans un format interne au générateur de code architectural. Ce format est partagé par tous les modules qui en ont besoin.

L'analyseur de description d'architecture vérifie que l'architecture décrite est cohérente avec les capacités des divers générateurs de code et adaptateurs clients et serveurs qui y sont mentionnés :
- il vérifie que le jeu de paramètres de filtrage de chaque espace technologique est compatible avec le jeu de paramètres de filtrage des générateurs de code associés, en se reposant pour cette vérification sur les services rendus par le filtre d'espaces technologiques (tels que décrits au point 1.5) ;
   - il vérifie que les adaptateurs client et serveur mentionnés sont bien compatibles avec la technologie prise en charge par le générateur de code de l'espace technologique auquel ils sont eux-mêmes associés ;
   - il vérifie aussi que les adaptateurs client et serveur sont compatibles entre eux ;
   - il peut aussi vérifier, si les générateurs de code sont paramétrables, que le jeu de paramètres de fonctionnement de chaque espace technologique de l'architecture correspond à des paramètres référencés du générateur de code en question.

Il vérifie aussique pour un couple de deux espaces technologiques donnés client et serveur, il n'y a qu'un seul couple d'adaptateur client et serveur associé dans la description de l'architecture. Ces vérifications sont effectuées afin d'éviter les ambiguïtés de répartition des dépendances entre classes sur les adaptateurs.

### 1.5) Filtre d'espaces technologiques

Ce module utilise un jeu de paramètres de filtrage comme la définition d'un ensemble de classes. Pour un jeu de paramètres de filtrage donné, il détermine, pour toute classe, si elle appartient ou non à l'ensemble de classe défini par ce jeu de paramètres de filtrage. Enfin, il fournit deux services fondés sur les jeux de paramètres de filtrage :
- le filtrage des espaces technologiques ;
- la vérification de l'inclusion de deux jeux de paramètres de filtrage.

Le filtrage des espaces technologiques consiste, à partir d'une liste d'espace technologique et d'une classe, à renvoyer la liste des espaces technologiques pour lesquels la classe en question appartient à l'ensemble de classe défini par le jeu de paramètres de filtrage associés à ces espaces technologiques.

La notion d'inclusion de deux jeux de paramètres est définie comme suit : soient deux jeux de paramètres de filtrages J1 et J2, J1 est inclus dans J2, si, pour toute classe C appartenant à l'ensemble défini par J1, C appartient à l'ensemble défini par J2.

### 1.6) Générateurs de code

Les générateurs de code sont des modules du générateur de code architectural capables de produire du code pour une technologie particulière qui permet de décrire des algorithmes.

Leur rôle est de produire le code correspondant à une classe à partir de la définition de celle-ci, de ses dépendances avec d'autres classes. Dans le cas de dépendances externes d'une classe avec d'autres classes prises en charge dans le même espace technologique, le code correspondant aux interfaces de cette classe avec ces autres classes est généré par ces mêmes générateurs de code. Dans le cas de dépendances externes de cette classe avec d'autres classes prises en charge dans des espaces technologiques différents, le code des interfaces de cette classe avec ces autres classes n'est pas généré, mais les générateurs de code font figurer dans le code de cette classe une marque qu'ils choisissent, dite marque de localisation, permettant de retrouver l'endroit précis du code où cette dépendance sera traitée.

Si la technologie qu'ils prennent en charge le nécessite, les générateurs de codeproduisent les fichiers nécessaires pour contenir le code produit. Dans tous les cas, ils renvoient des références d'accès permettant d'accéder au code produit.

Les générateurs de code sont munis d'un identifiant unique qui permet de les désigner de façon absolue dans la description de l'architecture technique.

Ils sont prévus pour fournir un jeu de paramètres de filtrage qui définit l'ensemble de classes (au sens du point 1.5) dont ils peuvent produire le code.

Ils présentent aussi optionnellement une liste de paramètres et les moyens de définir la valeur de ces paramètres afin de qualifier l'environnement matériel et logiciel dans lequel cette technologie est exécutée et de définir ainsi plus finement si nécessaire l'espace technologique et les conditions de la génération de code.

Un paramètre de fonctionnement peut par exemple être le répertoire dans lequel seront stocké les fichiers source généré. Un autre exemple peut être le choix de la version du 'jdk' à utiliser dans le cas de l'utilisation d'un générateur de code Java.

### 1.7) Adaptateurs serveurs

Les adaptateurs serveurs permettent de générer du code dans un ou plusieurs espaces technologiques donnés. Ce code peut être intégré au code produit par un générateur de code. Ce code joue le rôle d'interface serveur assurant la communication entre deux classes impliquées dans une dépendance. Ce code s'intègre au code qu'a produit un générateur de code pour la classe serveur impliquée dans cette dépendance. Le code produit par cet adaptateur serveur permettra au code produit par un adaptateur client, intégré au code qu'a produit un générateur de code pour la classe client de cette dépendance, de s'interfacer avec lui.

Les adaptateurs serveurs sont munis d'un identifiant unique qui permet de les désigner dans la description de l'architecture technique.

Ils indiquent dans quelle catégorie d'interface ils se classent. Ces catégories d'interfaces servent à déterminer la compatibilité de ces adaptateurs serveurs avec des adaptateurs clients. Elles sont définies librement par les adaptateurs serveurs et peuvent être partagées par plusieurs adaptateurs serveurs différents.

Parmi les catégories d'interface que peuvent définir les adaptateurs, on peut citer par exemple CORBA® et RMI ®.

Les adaptateurs serveurs indiquent quels sont le ou les générateurs de code dont ils sont capables de modifier le code produit pour y insérer le code de leurs interfaces serveurs ou de produire du code d'interfaçage externe au code produit par ce ou ces générateurs de code.

Les adaptateurs serveurs produisent le code d'interface serveur à partir d'une dépendance, des classes impliquées dans cette dépendance et des références d'accès au code produit pour ces classes par les générateurs de code correspondants à cette dépendance.

Les adaptateurs serveur recoiventde préférence un signal de fin de transmission de requête de génération de code, leur indiquant qu'ils n'en recevront plus d'autres ultérieurement au cours du processus de génération de code architectural. En effet, certaines technologies peuvent nécessiter que les adaptateurs attendent d'avoir reçu toutes les requêtes avant de commencer à modifier le code produit par les générateurs. Il se peut par exemple que les instructions produites doivent être agencées dans un ordre différent que celui-ci dans lequel elles se trouvaient dans la description d'application d'origine et que cet ordre dépende de la nature de toutes les instructions concernées.

Les adaptateurs serveurs sont prévus pour pouvoir recevoir successivement plusieurs requêtes de génération de code d'interface serveur pour plusieurs dépendances, et ils choisissent, selon les contraintes des technologies qu'ils font communiquer et la manière dont ils les font communiquer, s'ils produisent et insérentle code des interfaces générées au fur et à mesure de la réception de ces requêtes ou s'il doivent attendre le signal de fin de transmission des requêtes émis par le répartiteur pour insérer ce code.

### 1.8) Adaptateurs clients

Les adaptateurs clients permettent de générer du code dans un ou plusieurs espaces technologiques donnés. Ce code peut être intégré au code produit par un générateur de code. Ce code joue le rôle d'interface client assurant la communication entre deux classes impliquées dans une dépendance. Ce code est de préférence intégré au code qu'a produit un générateur pour la classe client impliquée dans cette dépendance. Le code produit par cet adaptateur client s'interface avec le code, produit par un adaptateur serveur, intégré au code qu'a produit un générateur de code pour la classe serveur de cette dépendance.

Les adaptateurs clients sont munis d'un identifiant unique qui permet de les désigner dans la description de l'architecture technique.

Ils indiquent dans quelle catégorie d'interface ils se classent. Ces catégories d'interfaces servent à déterminer la compatibilité de ces adaptateurs clients avec des adaptateurs serveurs. Elles sont définies librement par les adaptateurs clients et peuvent être partagées par plusieurs adaptateurs clients différents.

Les adaptateurs clients indiquent quels sont le ou les générateurs de code dont ils sont capables de modifier le code produit pour y insérer le code de leurs interfaces clients ou de produire du code d'interfaçage externe au code produit par ce ou ces générateurs de code.

Les adaptateurs client doivent produire le code d'interface client à partir d'une dépendance, des classes impliquées dans cette dépendance et des références d'accès au code produit pour ces classes par les générateurs de code correspondants à cette dépendance. Les adaptateurs clients doivent comprendre et utiliser les marques de localisation laissées par les générateurs de code avec lesquels ils sont compatibles.

Les adaptateurs clients doivent pouvoir recevoir un signal de fin de transmission de requête de génération de code, leur indiquant qu'ils n'en recevront plus d'autres ultérieurement au cours du processus de génération de code architectural. En effet, certaines technologies peuvent nécessiter que les adaptateurs attendent d'avoir reçu toutes les requêtes avant de commencer à modifier le code produit par les générateurs.

Les adaptateurs clients doivent pouvoir recevoir successivement plusieurs requêtes de génération de code d'interface client pour plusieurs dépendances, et ils choisissent, selon les contraintes des technologies qu'ils font communiquer et la manière dont ils les font communiquer, s'il doivent produire et insérer le code des interfaces générées au fur et à mesure de la réception de ces requêtes ou s'il doivent attendre le signal de fin de transmission des requêtes émis par le répartiteur pour insérer ce code.

En fin de génération de code, les adaptateurs doivent avoir fait disparaître du code les marques de localisation que les générateurs de code y ont placé.

### 1.9) Comparateur

Le comparateur vérifie la cohérence entre les capacités de génération de code offerte par la description d'architecture et les besoins de la description d'application en terme de génération de code. Il vérifie donc que les toutes les classes et dépendances entre classes de l'application sont prises en charge par des espaces technologiques et adaptateurs adéquats. Pour ce faire, le comparateur utilise notamment les services du filtre d'espaces technologiques. Il permet de vérifier les conditions suivantes :
- pour chacune des classes que l'analyseur de description d'application a décelées dans la description d'application, il vérifie qu'il existe, dans la description de l'architecture technique, un espace technologique prenant en charge ces classes ;
- pour chaque dépendance, définie dans l'application décrite, entre une classe client et une classe serveur prises en charges par des espaces technologiques différents, il vérifie qu'il existe un adaptateur serveur et un adaptateur client associés à chaque couple constitué d'un espace technologique prenant en charge la classe client et d'un espace technologique prenant en charge la classe serveur.

En cas de lacunes dans la description de l'architecture technique par rapport aux besoins de l'application qui entraîne une incapacité de générer son code, le comparateur émet un message d'erreur en communiquant ces lacunes.

### 1.10) Répartiteur

Le répartiteur est chargé de distribuer les classes et les dépendances de la représentation décomposée de la description de l'application, en fonction de l'architecture, sur les différents générateurs de codes et adaptateurs clients et adaptateurs serveurs, ainsi que le prévoit le processus décrit au point 1.12).

Si l'ordre d'appel des différents adaptateurs client n'est pas indifférent pour la génération de code, il détermine cet ordre et appele ensuite les adaptateurs clients concernés dans cet ordre. Si l'ordre d'appel des différents adaptateurs serveur n'est pas indifférent pour la génération de code, il détermine cet ordre et appele ensuite les adaptateurs serveur concernés dans cet ordre. Si l'ordre d'appel des différents générateurs n'est pas indifférent pour la génération de code, il détermine cet ordre et appele ensuite les générateurs concernés dans cet ordre.

### 1.11 ) Coordinateur

Le coordinateur enchaîne les appels des différents éléments du générateur de code architectural décrits ci-dessus. Il suit le processus décrit au point 1.12) et il assure la transmission des paramètres nécessaires au fonctionnement du générateur de code architectural d'un module à l'autre. Enfin, il assure l'interaction entre le générateur de code architectural et le système extérieur (programme appelant ou utilisateur humain) qui en déclenche le fonctionnement, en lui transmettant les erreurs et les messages éventuellement émis par les différents modules.

### 1.12) Fonctionnement

Nous allons décrire le fonctionnement du générateur de code architectural en relation avec la figure 4 qui illustre les étapes du fonctionnement.
Etape Init. Le système extérieur déclenche la génération de code architecturale par l'intermédiaire du coordinateur. Il lui transmet la liste des fichiers de description de l'application au format décrit au point 1.1) et des fichiers de description de l'architecture au format décrit au point 1.3). Si on fournit plusieurs fichiers, on les fournit simultanément dans le cas où leur présence à tous est nécessaire pour interpréter la description.
Etape 1. Le coordinateur fournit à l'analyseur de description d'application les fichiers de description de l'application exprimés dans le format du point 1.1). L'analyseur de description d'application analyse ces fichiers et renvoie la représentation décomposée de l'application. En cas d'erreur émise lors de cette étape, le processus de génération s'arrête.
Etape 2. Le coordinateur fournit à l'analyseur de description d'architecture les fichiers de description de l'architecture exprimés dans le format du point 1.3). L'analyseur de description d'architecture analyse ces fichiers et renvoie la représentation décomposée de l'architecture. Au cours de cette étape l'analyseur de description d'architecture effectue les tâches suivantes :..
   Etape 2.1. Si les générateurs de code sont paramétrables, l'analyseur de description d'architecture sollicite le générateur de code de chaque espace technologique pour obtenir sa liste de paramètres de fonctionnement. L'analyseur de description d'architecture vérifie alors que le jeu de paramètres de fonctionnement de ces espaces technologiques ne définit de valeur que pour des paramètres de cette liste. Dans tous les cas, il sollicite le générateur de code de chaque espace technologique pour en obtenir son jeu de paramètre de filtrage.
   Etape 2.2. Pour chaque espace technologique, l'analyseur de description d'architecture interroge le filtre d'espaces technologiques et invoque le service de vérification de l'inclusion de deux jeux de paramètres de filtrage, afin de vérifier que le jeu de paramètres de filtrage de l'espace technologique est bien inclus dans le jeu de paramètres de filtrage du générateur. Une erreur est émise dans le cas contraire.
   Etape 2.3. Pour chaque adaptateur serveur utilisé dans l'architecture, l'analyseur de description d'architecture interroge cet adaptateur afin qu'il lui renvoie la liste des générateurs de code avec lesquels il est compatible, ainsi que la catégorie dans laquelle il classe les interfaces qu'il génère. L'analyseur de description d'architecture vérifie alors que pour chaque espace technologique dont l'adaptateur serveur doit réaliser les interfaces serveur, le générateur de code associé à cet espace est bien présent dans la liste de générateurs de code avec lesquels il est compatible. Une erreur est émise dans le cas contraire.
   Etape 2.4. Pour chaque adaptateur client utilisé dans l'architecture, l'analyseur de description d'architecture interroge cet adaptateur afin qu'il lui renvoie la liste des générateurs de code avec lesquels il est compatible ainsi que la catégorie dans laquelle il classe les interfaces qu'il génère. L'analyseur de description d'architecture vérifie alors que pour chaque espace technologique dont l'adaptateur client doit réaliser les interfaces client, le générateur de code associé à cet espace est bien présent dans la liste de générateurs de code avec lesquels il est compatible. Il vérifie aussi que l'adaptateur client en question produit bien des interfaces de la même catégorie que l'adaptateur serveur auquel il est associé. Une erreur est émise dans le cas contraire.
   En cas d'erreur, le processus de génération s'arrête.
Etape 3. Le coordinateur transmet la représentation décomposée de l'application et la représentation décomposée de l'architecture au comparateur. Le comparateur vérifie que les besoins de l'application en terme de génération de code sont pris en charge par l'architecture :
   Etape 3.1. Pour chaque classe définie dans l'application, le comparateur interroge le filtre d'espaces technologiques et invoque le service de filtrage d'espaces technologiques, afin d'obtenir la liste des espaces technologiques de l'architecture qui prennent en charge cette classe. Le comparateur vérifie alors que pour chaque classe, cette liste est non vide. Dans le cas contraire, une erreur est émise.

   Le comparateur poursuit ensuite la détection des lacunes éventuelles en vérifiant que pour chaque dépendance entre deux classes, l'architecture définit un couple d'adaptateurs client et serveur pour chaque paire d'espaces technologique qui prend en charge les deux classes de cette dépendance.
   Si la comparaison se solde par une erreur, la liste des lacunes détectées est transmise à l'appelant et le processus de génération s'arrête.
Etape 4. Le coordinateur transmet au répartiteur la représentation décomposée de l'application, la représentation décomposée de l'architecture. Au cours de cette étape, le répartiteur effectue les tâches suivantes :
   Etape 4.1. Pour chaque classe définie dans l'application, le répartiteur interroge le filtre d'espaces technologiques et invoque le service de filtrage d'espaces technologiques, afin d'obtenir la liste des espaces technologiques de l'architecture qui prennent en charge cette classe.
   Etape 4.2. Pour chaque classe et pour chaque espace technologique prenant en charge cette classe, le répartiteur regroupe cette classe, ses dépendances, en lui indiquant celles qui correspondent à des dépendance envers des classes prises en charge par des espaces technologiques différents de l'espace considéré, et les transmet au générateur de code associé à cet espace. Le répartiteur lui transmet aussi le jeux de paramètres de fonctionnement qualifiant l'environnement matériel et logiciel définis par cet espace technologique.
      En retour, le répartiteur obtient les références d'accès aux codes sources produits.
   Etape 4.3. Le répartiteur traite chaque dépendance de la représentation décomposée de la description d'application concernant deux classes prises en charge par des espaces technologiques différents.
      Pour chacune de ces dépendances, le répartiteur détermine alors quels adaptateurs serveur doivent prendre en charge cette dépendance, d'après la description d'architecture. Pour une dépendance entre une classe client et une classe serveur, les adaptateurs serveur en question sont ceux qui sont associés à une dépendance entre les espaces technologiques qui ont pris en charge la classe serveur et les espaces technologiques qui ont pris en charge la classe client.
      Pour chacune de ces dépendances, le répartiteur transmet alors cette dépendance, ainsi que les classes concernées par cette dépendance et les références d'accès aux codes sources associés à ces classes, à ces adaptateurs serveur.
   Etape 4.4. Le répartiteur traite chaque dépendance de la représentation décomposée de la description d'application concernant deux classes prises en charge par des espaces technologiques différents.
      Pour chacune de ces dépendances, le répartiteur détermine alors quels adaptateurs client doivent prendre en charge cette dépendance, d'après la description d'architecture. Pour une dépendance entre une classe client et une classe serveur, les adaptateurs client en question sont ceux qui sont associés à une dépendance entre les espaces technologiques qui ont pris en charge la classe serveur et les espaces technologiques qui ont pris en charge la classe client.
      Pour chacune de ces dépendances, le répartiteur transmet alors cette dépendance, ainsi que les classes concernées par cette dépendance et les références d'accès aux codes sources associés à ces classes, à ces adaptateurs client.
   Etape 4.5. Le répartiteur appelle chaque adaptateur serveur qui a été sollicité durant l'étape 4.3 et lui envoie le signal de fin de transmission de requête. Cet appel se fait dans l'ordre requis si c'est nécessaire, ainsi que le détermine le répartiteur.
   Etape 4.6. Le répartiteur appelle chaque adaptateur client qui a été sollicité durant l'étape 4.4 et lui envoie le signal de fin de transmission de requête. Cet appel se fait dans l'ordre requis si c'est nécessaire, ainsi que le détermine le répartiteur.
   En cas d'erreur, le processus de génération s'arrête.

### 2) Le language de description de logiciel

### 2.1) Qualification du language selon l'invention.

L'invention s'intègre à un langage de description de logiciel. Elle lui permet de décrire un logiciel, existant ou en cours d'élaboration, sans que cette description ne contienne d'informations liées à la réalisation pratique et technologique de ce logiciel (c'est-à-dire sans dépendance envers les capacités spécifiques d'un langage de programmation, d'une plate-forme informatique matérielle ou logicielle, ou plus généralement d'une technologie particulière) mais en décrivant de façon concrète son fonctionnement. La description concrète du fonctionnement est réalisée grâce à la mise à disposition via le langage de notions concrètes liées à la mise en oeuvre informatique pratique des applications. Ces notions sont destinées à servir de base à la description de l'application. L'exploitation de ces notions et la clarification de leur fonctionnement et de leur rôle peuvent reposer sur leur association à une spécification fonctionnelle et technique exprimé dans un langage, qui peut même être un langage naturel tel que le français, qui ne présume par des technologies employées pour la mettre en oeuvre. Citons en exemple des notions telles que celles de composant graphique, d'événement de périphérique, de vérification de donnée à partir d'une saisie dans l'interface homme machine, de navigation, de stockage d'information, de requête de recherche d'information dans une structure de stockage d'information, etc.

L'absence, dans les descriptions faites à l'aide d'un langage doté de l'invention, d'informations liées à la mise en oeuvre pratique et technique de l'application décrite place ce langage, dans le diagramme de classement des langages de la figure 1, au dessus des langages de modélisation abstraite. En effet, son niveau d'indépendance technologique est supérieur puisqu'il ne souffre pas de leurs limitations décrites dans la partie consacrée à l'art antérieur.

En ce qui concerne l'échelle horizontale du diagramme de la figure 1, le langage selon l'invention se place à droite des langages de quatrième génération. En effet, si, tout comme eux, l'analyse sémantique automatique peut se reposer sur l'assurance de l'utilisation, par le programmeur, d'un cadre strict lors de la modélisation d'un service technique ou fonctionnel donné, la richesse des éléments disponibles pour décrire une application informatique est supérieure car elle est rendue indépendante d'une implémentation spécifique et se concentre sur la description du service rendu.

### 2.2) Structure du language selon l'invention

### 2.2.1) Contexte

L'invention repose sur un langage de description de logiciel, c'est-à-dire qu'il permet de réaliser une représentation de tout ou partie d'une application logicielle. Le langage considéré permet de définir des classes dites classes standards.

Ce langage peut définir des opérations élémentaires permettant de décrire des algorithmes.

Ce langage supporte éventuellement l'héritage, c'est-à-dire la capacité de définir des classes enrichissant d'autres classes. En cas de prise en charge de l'héritage, le langage permet éventuellement de définir des classes abstraites, c'est-à-dire des classes qu'on ne peut instancier en objets et dont certaines méthodes peuvent être abstraites, c'est-à-dire des méthodes dont le fonctionnement est non défini mais devra être défini par les classes non abstraites qui héritent de ces classes abstraites. Le langage permet éventuellement de définir la portée des attributs, des méthodes et des classes, c'est-à-dire la capacité d'accès des autres classes à ces différents éléments selon leur position relative. Ce langage supporte éventuellement le polymorphisme, c'est-à-dire la capacité de manipuler une instance d'une classe B héritant d'une classe A comme si elle était une instance de la classe A et, lors d'appels à des méthodes de cette instance manipulée comme une instance d'une classe A, d'utiliser l'implémentation définie dans la classe B au lieu de l'implémentation définie dans la classe A. Le lexique et la syntaxe de ce langage sont indifférents, du moment qu'ils respectent les contraintes établies au paragraphe précédent. Ce langage peut éventuellement définir des types primitifs (par exemple, les booléens ou les entiers) qui ne sont pas nécessairement des classes, et dans ce cas, éventuellement définir des opérations élémentaires permettant de manipuler ces types primitifs.

Le langage est défini par une spécification qui précise l'ensemble de ces éléments et leurs conditions d'utilisation (lexique et syntaxe, et le cas échéant, héritage, polymorphisme, classes abstraites, portée, types primitifs, opérations élémentaires).

Enfin, le langage, tel qu'il est défini jusque là, ne fournit pas et ne doit pas fournir de moyen d'accès à des services techniques ou fonctionnels pouvant être rendus par une quelconque plate-forme matérielle et logicielle susceptible d'accueillir un logiciel modélisé à l'aide de ce langage, hormis les opérations élémentaires sus-citées. En exemple de ces services auquel le langage ne doit pas donner accès à ce stade, citons : la capacité d'afficher des informations sur un périphérique d'affichage ou d'impression, la réception d'événements émis par un périphérique de commande comme le clavier ou la souris, la communication avec un service de stockage d'information, ...

### 2.2.2) L'invention

L'invention consiste :
- à enrichir le lexique et la syntaxe du langage de façon à le doter d'un format de description spécifique pour des classes dites classes fondamentales,
- et à associer optionnellement à ce langage une technique de définition de ces classes fondamentales.

Ces classes sont dites fondamentales, car elles donnent, aux autres classes qui les utilisent, un accès à des services techniques ou fonctionnels fondamentaux, c'est-à-dire des services qui ne sont pas portés directement par ces classes fondamentales via une définition exprimée grâce au langage lui-même. Contrairement aux classes standards, le lien entre les classes fondamentales et leur définition est externe au langage. Il dépend totalement d'une interprétation extérieure, par exemple par les outils utilisant cette invention, fondée sur une définition extérieure aux classes fondamentales.

*Le format de description des classes fondamentales,* intégré au langage, permet :
1- de toujours pouvoir identifier une classe fondamentale comme telle,
2- de toujours pouvoir distinguer une classe fondamentale d'une classe standard,
3- de définir son identifiant unique,
4- de définir ses attributs, qui ne peuvent avoir une portée les rendant invisible à toute autre classe si le langage prévoit la définition de la portée,
5- de définir des méthodes dites fondamentales sans en détailler le fonctionnement, qui sont par nature non abstraites, dans le cas où les classes abstraites sont supportées, et qui ne peuvent avoir une portée les rendant invisibles à toute autre classe si le langage prévoit la définition de la portée. Ces méthodes fondamentales sont des méthodes dont la définition se limite aux seules signatures, mais dont le fonctionnement n'est pas exprimé grâce au langage lui-même et doit pourtant être considéré comme défini par tout système exploitant ce langage.

*La technique de définition des classes fondamentales* impose, pour une classe fondamentale, de fournir :
1- sa description grâce au langage tel qu'enrichi ci-dessus par le format de description des classes fondamentales,
2- si l'héritage est supporté et dans ce cas de façon optionnelle, un lexique et une syntaxe, compatible avec le langage, spécifiques à cette classe, définissant le format utilisé dans le langage pour décrire les classes héritant de cette classe,
3- si l'invention le prévoit, la spécification fonctionnelle ou technique exhaustive des services rendus par cette classe, exprimée dans un langage indépendant des technologies de mise en oeuvre, qui peut même être un langage naturel tel que le français. Cette spécification ne doit pas présumer des technologies employées pour la mettre en oeuvre. Elle doit clarifier le fonctionnement de toutes les méthodes fondamentales de cette classe (cf. le dernier tiret au point ci-dessus consacré au format de description des classes fondamentales). Il s'agit en résumé de la sémantique complète des points 1 et 2 de cette technique. Cette spécification sera éventuellement traduite dans les langues des personnes susceptibles de réaliser des outils prenant en charge cette classe, avec, pour chaque version, la référence de la langue en se basant pour cela sur un système d'identification de langue défini.

Le fonctionnement de ces classes fondamentales n'est donc pas défini explicitement, de manière algorithmique, en utilisant le langage lui-même, mais peut être défini seulement par cette spécification fonctionnelle ou technique exprimée dans un langage indépendant des technologies de mise en oeuvre, tel qu'un langage naturel comme le français par exemple.

De plus, du fait de l'absence exposée au point 2.2.1) de moyen d'accès à des services techniques ou fonctionnels pouvant être fournis par une quelconque plate-forme matérielle ou logicielle, seules les classes fondamentales sont susceptibles de donner accès à ces services.

Les classes fondamentales sont elles-mêmes soumises aux lois de l'héritage si celui-ci est présent dans le langage. Dans ce cas, on peut faire hériter une classe fondamentale d'une classe standard ou fondamentale, au même titre qu'on peut faire hériter une classe standard d'une classe standard ou fondamentale.

### 2.3) Fonctionnement

*Fonctionnement des classes fondamentales.* La mise en oeuvre des spécifications des classes fondamentales est donc entièrement dévolue aux outils qui exploitent un langage selon l'invention. Ce sont ces outils qui réalisent ou simulent le fonctionnement de ces classes, selon les besoins.

*Responsabilité du fonctionnement des classes fondamentales.* Les outils qui utilisent ou permettent d'effectuer une description d'application avec un langage selon l'invention et dépendant de classes fondamentales, doivent ainsi être conçus de façon à prendre en compte les spécifications de ces classes fondamentales lorsqu'ils doivent les interpréter. L'interprétation du rôle de ces classes fondamentales par ces outils repose donc sur la conformité de ces outils avec les spécifications de ces classes fondamentales.

*Intégration éventuelle de classes fondamentales à un langage.* Un langage selon l'invention peut éventuellement intégrer, dans sa spécification elle-même, un ensemble de ces classes fondamentales (dans ce cas non modifiables par l'utilisateur du langage) qui, une fois spécifiées selon la technique décrite au point 2.2.2, permettent aux descriptions de logiciels effectuées grâce à ce langage et exploitant ces classes fondamentales de faire reposer ces logiciels sur les services de ces classes fondamentales.

### Extension d'un langage par des classes fondamentales lors de son utilisation.

La technique de définition des classes fondamentales peut aussi être rendue accessible aux utilisateurs du langage pour étendre les capacités du langage au-delà de ses spécifications en y ajoutant de nouvelles classes fondamentales en plus des classes fondamentales éventuellement fournies avec le langage. Dans ce cas, il sera préférable de doter les outils exploitant ce langage d'un mécanisme d'extension qui permette aux utilisateurs définissant ces nouvelles classes fondamentales d'enrichir le fonctionnement de ces outils à l'aide de modules additionnels afin que ces outils puissent prendre en compte dans le cadre de leur fonctionnement ces classes fondamentales conformément à la spécification de ces classes.

*Intérêt pour l'analyse sémantique automatique.* Les outils qui permettront d'analyser les descriptions effectuées grâce à un langage doté de cette invention seront capables d'identifier des services techniques ou fonctionnels par la simple identification de l'utilisation des classes fondamentales dans la description d'application. Cette analyse sera ainsi faite sans ambiguïté. En effet, la capacité d'un outil d'analyse à fournir une analyse sémantique automatique de ces descriptions repose seulement sur la connaissance, par le développeur de cet outil, des spécifications des classes fondamentales, et non sur la déduction du rôle des classes utilisées par l'analyse algorithmique de la définition des classes décrites à l'aide du langage, chose impossible aujourd'hui sans intervention humaine.

*Notion de définition exclusive et méthode de renforcement.* Dans le cadre d'un langage selon l'invention, l'exclusivité, possédée par les classes fondamentales, de la fourniture d'un service matériel ou logiciel donné reposant sur les spécificités de la plate-forme d'accueil du logiciel décrit, est assurée par l'absence de ces services dans la définition du langage lui-même. Par contre, pour les services purement algorithmiques, cette exclusivité n'est pas assurée par le langage, car il permet la description d'algorithmes, et elle reposera donc sur une contrainte extérieure. Cette exclusivité est l'assurance du déterminisme complet de l'analyse sémantique automatique. Pour l'assurer, on concevra des outils produisant les descriptions de logiciels décrits grâce à un langage doté de cette invention, de telle manière qu'il soit impossible d'utiliser le langage pour décrire des algorithmes dans certains cas pris en charge par des classes fondamentales donnant accès à des services algorithmiques particuliers.

*Application à la génération de code.* Parmi les applications possibles de l'analyse sémantique automatique permise par l'invention, on peut citer la génération de code vers des architectures techniques distribuées qui permet notamment à un logiciel décrit à l'aide d'un langage doté de cette invention d'être portée vers n'importe quelle architecture technique fournissant les services décrits par les classes fondamentales utilisées dans la description de ce logiciel. En particulier, un language selon l'invention peut avantageusement être utilisé avec un logiciel de génération de code selon l'invention tel que du type décrit au point 1) de la présente description.

Bien entendu, la présente invention n'est pas limitée aux exemples et au mode de réalisation décrits et représentés, mais elle est susceptible de nombreuses variantes accessibles à l'homme de l'art.

Le logiciel de génération de code ainsi quele language de description de logiciel selon l'invention procurent un gain de productivité du développement des applications informatiques estimé à près de 70% par l'automatisation d'un certain nombre de tâches de programmation. L'invention confère aussi une liberté sans équivalent par rapport aux technologies utilisées au cours du processus de développement. Les technologies sont une cause majeure d'aléas et d'incertitudes dans les projets informatiques. Cette liberté se traduit donc par une diminution des risques d'échecs et une meilleure tenue des budgets et des délais.Le fait de ne définir qu'un modèle d'application indépendant des technologies offre plusieurs avantages. D'abord, on n'a pas à considérer les contraintes techniques durant la modélisation, ce qui simplifie celle-ci. Ensuite cela permet d'obtenir un modèle plus proche des attentes des utilisateurs car non perverti par des questions qui n'ont rien à voir avec le fonctionnel. De ce fait la phase de conception converge plus rapidement vers le résultat souhaité. De plus, il n'y a pas ensuite d'autres tâches à exécuter que la réalisation de ce modèle. En effet, on peut obtenir l'application intégralement réalisée techniquement sans intervention humaine autre que l'indispensable conception technique. Cela est possible car on peut produire le code de programmation automatiquement à partir du modèle qui contient toutes les informations nécessaires pour décrire l'application.

Par ailleurs, l'invention améliore la fiabilité sur deux plans : la fiabilité de l'application informatique obtenue et la fiabilité des prévisions de déroulement des projets. Concernant les applications informatiques, ils peuvent être réalisés automatiquement par le logiciel de génération de code et ils ne comportent pas d'autres erreurs que celles introduites dans la conception fonctionnelle, et celles introduites par les générateurs de code eux-mêmes. On peut raisonnablement partir du principe que ces dernières seront moins nombreuses que celles produites par un programmeur humain car les schémas de programmation utilisés peuvent être rôdés sur un nombre de projets très important. Et elles sont susceptibles de corrections et d'améliorations incrémentales au cours de la vie du produit, ce qui permettra de capitaliser sur les progrès en qualité. Quant aux erreurs introduites par la conception fonctionnelle, les modèles produits par application de l'invention étant plus simple à valider, on peut estimer qu'elles seront moins nombreuses.

Concernant le déroulement des projets, il faut noter que, dans de nombreux projets, les aspects techniques introduisent des difficultés insoupçonnées de réalisation et que certains choix d'architecture se révèlent à l'usage désastreux pour la tenue des délais et des budgets. Jusqu'alors on était souvent contraint de les subir, car il était trop tard pour revenir sur ce type de choix. Grâce à l'invention, les contraintes techniques sont assumées par les générateurs de code, et les choix d'architecture sont révisables. Le déroulement des projets subira donc moins de heurts et s'écartera moins des prévisions. Enfin un autre élément peut-être encore plus important qui vient régulièrement perturber le déroulement des projets, est le changement des spécifications fonctionnelles en cours de projet. C'est un événement quasi-systématique et qui a des conséquences lourdes sur les projets en terme de charge. Cet inconvénient peut être évité car il n'y a plus d'impact en terme de charge autre que la redéfinition du modèle grâce à l'invention, et la transcription technique de ces modifications a un coût quasi-nul comme nous l'avons vu. Comme les spécifications fonctionnelles sont validées avec les utilisateurs à partir de la simulation du modèle, les changements devraient de surcroît être moins fréquents car une validation en condition réelle est plus fiable qu'une validation sur schémas ou maquette.

Un autre avantage de l'invention est la possibilité de réutiliser les développements. Cette possibilité issue de l'indépendance des technologies, permet de capitaliser à l'intérieur d'un projet ou entre des projets ayant des éléments fonctionnels en communs. Cela réduit notablement les coûts de développement et augmente la pertinence des applications produites par la validation croisée dont elles font ainsi l'objet. A long terme cette capacité de réutilisation peut se traduire par la possibilité de réaliser un portage de l'application. Cela permet de migrer une application vers une nouvelle architecture technique, lorsque cela s'avère nécessaire, sans surcoût important.

## Revendications

1. Un logiciel de génération du code informatique d'au moins une partie d'une application informatique, dans lequel le logiciel génère ledit code informatique à partir d'une description de ladite partie de l'application informatique en répartissant ladite description entre plusieurs générateurs de code en fonction de règles de répartition modifiables, chaque générateur de code traduisant la partie de ladite description qui lui est fournie, pour fournir au moins une partie dudit code informatique dans un langage respectif.

2. Le logiciel selon la revendication 1, décomposant ladite description sous forme de classes d'objets, le logiciel répartissant lesdites classes d'objets entre les générateurs de code en fonction desdites règles de répartition, chaque générateur de code traduisant les classes d'objets qui lui sont fournies, en ladite partie correspondante dudit code informatique.

3. Le logiciel selon la revendication 2, décomposant en outre ladite description sous forme de dépendances entre lesdites classes d'objets, et dans le cas d'une dépendance entre deux classes d'objets traduites chacune par un générateur de code différent, le logiciel fait traiter ladite dépendance par deux adaptateurs qui la traduisent chacun en un code informatique d'interfaçage des codes informatiques produits par lesdits générateurs de code pour lesdites deux classes d'objet.

4. Le logiciel selon la revendication 3, dans lequel chacun des deux adaptateurs produit ledit code informatique d'interfaçage respectif pour une classe d'objets respective parmi lesdites deux classes d'objets, chacun des deux adaptateurs insérant de préférence le code informatique d'interfaçage respectif dans le code informatique produit par l'un desdits générateurs de code pour ladite classe d'objets pour laquelle l'adaptateur a produit ledit code informatique d'interfaçage.

5. Le logiciel selon la revendication 3 ou 4, dans lequel lesdits deux adaptateurs devant traiter la dépendance sont choisis par le logiciel suivant des règles d'affectation associant, pour le sens de la dépendance desdites deux classes d'objets, un adaptateur correspondant à chacun des générateurs de code traduisant lesdites deux classes d'objets, lesdites règles d'affectation étant modifiables.

6. Le logiciel selon l'une quelconque des revendications 1 à 5, générant ledit code informatique à partir de ladite description faite dans un langage organisé en classes d'objets, dans lequel ledit langage permet de définir des premières classes donnant accès à des services techniques ou fonctionnels à fournir par les plate-formes informatiques matérielles et logicielles recevant l'application informatique, lesdits services n'étant pas définissables par ledit langage, et les autres classes dudit langage ne peuvent accéder à un quelconque desdits services que par l'intermédiaire desdites premières classes.

7. Le logiciel selon la revendication 6, répartissant ladite description entre les générateurs de code en fonction des règles de répartition associant au moins certaines desdites premières classes ou desdites autres classes dudit langage à au moins un desdits générateurs de code, et dans le cas où la revendication 6 dépend de la revendication 2, le logiciel décompose ladite description de préférence en premières classes ou autres classes dudit langage.

8. Le logiciel selon la revendication 6 ou 7 en ce qu'elles dépendent de la revendication 5, dans lequel le logiciel décompose ladite description sous forme de dépendances entre lesdites classes d'objet à partir de dépendances entre lesdites premières classes ou autres classes dudit langage.

9. Un langage de description de logiciel, notamment du type langage objet de modélisation d'application informatique, organisé en classes permettant de définir des premières classes donnant accès à des services techniques ou fonctionnels à fournir par les plate-formes informatiques matérielles et logicielles recevant l'application informatique, dans lequel :
- lesdits services ne peuvent pas être définis par ledit langage, et
- les autres classes ne peuvent accéder à un quelconque de ces services techniques ou fonctionnels que par l'intermédiaire desdites premières classes.

10. Logiciel permettant de construire graphiquement ou textuellement un modèle d'application informatique, notamment un modèle d'interface homme-machine d'application informatique et de fournir une description du modèle dans un langage selon la revendication 9.
